# EUROPÄISCHE PATENTSCHRIFT

(11) **EP 0 726 187 B1**
(45) Veröffentlichungstag und Bekanntmachung des Hinweises auf die Patenterteilung: **06.05.1998**
(21) Anmeldenummer: 96100830.7
(22) Anmeldetag: 22.01.1996
(51) Int. Cl.: B60R 22/24

(54) **Umlenkbeschlag für Sicherheitsgurte**
Seat belt guide loop
Pièce de renvoi pour ceinture de sécurité

(30) Priorität: 10.02.1995 DE 29502192 U
(43) Veröffentlichungstag der Anmeldung: 14.08.1996
(73) Patentinhaber: TRW Occupant Restraint Systems GmbH, 73551 Alfdorf (DE)
(72) Erfinder: Grau, Hermann, D-73568 Durlangen-Tanau (DE)
(74) Vertreter: Degwert, Hartmut, Dipl.-Phys.

(56) Entgegenhaltungen:
- DE-A- 3 401 938
- DE-U- 7 724 892
- DE-U- 7 818 261
- DE-U- 8 322 560
- FR-A- 2 524 326
- GB-A- 2 042 871

## Beschreibung

Die Erfindung betrifft einen Umlenkbeschlag für Sicherheitsgurte gemäß dem Oberbegriff des Patentanspruchs 1.

Ein Umlenkbeschlag dieser Art ist aus der DE 29 05 862 C2 bekannt. Durch die drehbar gelagerte Rolle werden Reibungsverluste bei der Umlenkung des Gurtbandes weitgehend vermieden. Durch Reibungsverluste am Umlenkbeschlag wird der Tragekomfort des Sicherheitsgurtes beeinträchtigt, weil eine stärkere Aufrollfeder in den Gurtaufrolle eingebaut werden muß. Umlenkbeschläge mit einer drehbar gelagerten Rolle konnten sich jedoch bisher nicht durchsetzen, weil bei einem größeren Schwenkwinkel des Umlenkbeschlages eine Stauchung des Gurtbandes an seinen Längskanten auftritt, so daß der Gurtbandlauf gehemmt und die angestrebte Leichtgängigkeit zunichte gemacht wird.

Die heute üblichen Umlenkbeschläge bestehen aus einem mit Kunststoff umspritzten, gestanzten Stahlteil. Zwischen Gurtband und Umlenkfläche tritt reine Gleitreibung auf. Die Überwindung dieser Gleitreibung erfordert eine ausreichend stark dimensionierte Aufrollfeder. Damit nun der Tragekomfort durch diese relativ starke Aufrollfeder nicht zu sehr beeinträchtigt wird und die heutigen hohen Anforderungen an den Tragekomfort erfüllt werden können, werden die Gurtaufroller mit einer aufwendigen, sogenannten Komfortausrüstung versehen, die in einem bestimmten Bereich des Gurtbandabzuges die normale Aufrollfeder abschaltet und eine schwächer dimensionierte Hilfsfeder an deren Stelle wirksam werden läßt. Eine solche Komfortausrüstung ist aber aufwendig und kommt daher nur in Fahrzeugen der gehobenen Klasse zum Einsatz.

Ein Umlenkbeschlag gemäß dem Oberbegriff des Patentanspruchs 1 ist aus der DE 78 18 261 U bekannt. Bei diesem Umlenkbeschlag sind die Seitenschenkel mit schräg verlaufenden Führungsflächen versehen, die eine Faltenbildung des Gurtbandes im Crashfall verhindern sollen. Diese Führungsflächen sind nur dann wirksam, wenn es zu keiner Bewegung des Gurtbandes relativ zum Umlenkbeschlag kommt; im normalen Betrieb, wenn also das Gurtband vom Umlenkbeschlag umgelenkt wird und über die Rolle läuft, sind diese Führungsflächen ohne Einfluß auf den Verlauf des Gurtbandes.

Ausgehend von diesem Stand der Technik besteht die Aufgabe der Erfindung darin, einen Umlenkbeschlag zu schaffen, der die Umlenkverluste, die dann auftreten, wenn das Gurtband über den Umlenkbeschlag vom Gurtaufroller abgezogen wird oder auf diesen aufgewickelt wird, sicher und zuverlässig über einen großen Verschwenkwinkelbereich auf ein Minimum reduziert.

Diese Aufgabe wird mit einem Umlenkbeschlag der eingangs genannten Art gelöst, der die Merkmale des kennzeichnenden Teils des Patentanspruchs 1 aufweist. Ein solcher Umlenkbeschlag für Sicherheitsgurte reduziert die Umlenkverluste auf ein solches Maß, daß sich eine Komfortausrüstung des Gurtaufrollers erübrigt, der jedoch über einen großen Verschwenkungswinkelbereich keine störende Stauchung der Längskanten des Gurtbandes hervorruft und darüber hinaus einfach hergestellt werden kann. Durch den konkav gekrümmten Übergang zwischen dem zylindrischen Hauptabschnitt der Rolle und der Innenfläche der Schenkel wird das Gurtband an der betreffenden Längskante entsprechend dem Verlauf des Übergangs lediglich leicht und stetig gekrümmt. Der leichtgängige Lauf des Gurtbandes über den Umlenkbeschlag wird hierdurch nicht beeinträchtigt.

Weitere vorteilhafte Merkmale des Umlenkbeschlages ergeben sich aus der folgenden Beschreibung mehrerer Ausführungsformen und aus der Zeichnung, auf die Bezug genommen wird. In der Zeichnung zeigen:
Fig. 1 schematisch und in Perspektive eine erste Ausführungsform des Umlenkbeschlages;
Fig. 2 eine Schnittansicht entlang Linie II-II in Fig. 1;
Fig. 3 eine teilweise geschnittene Darstellung einer zweiten Ausführungsform des Umlenkbeschlages;
Fig. 4 eine Schnittansicht entlang Linie IV-IV in Fig. 3; und
Fig. 5 einen Teilschnitt einer bevorzugten Ausführungsform, die aufgrund der gezeigten Lagerung der Rolle nicht unter den Schutzumfang der Patentansprüche fällt.

Bei allen Ausführungsformen des Umlenkbeschlages umfaßt dieser einen U-förmigen Bügel 10, der aus einem schmalen Blechstreifen gleichbleibender Breite gebogen ist, und eine Rolle 12, die zwischen den parallelen Schenkeln 10a, 10b des Bügels 10 auf einem Bolzen 14 drehbar gelagert ist. Die Rolle 12 besteht aus einem zylindrischen Hauptabschnitt 12a und zwei trompetenförmig erweiterten Endabschnitten 12b, 12c. An diesen Endabschnitten 12b, 12c ist die Rolle 12 mittels Kugeln 16 auf dem Bolzen 14 gelagert. Die Endabschnitte 12b, 12c der Rolle 12 bilden einen stetig konkav gekrümmten Übergang zwischen dem zylindrischen Hauptabschnitt 12a der Rolle 12 und der Innenfläche des betreffenden Schenkels 10a bzw. 10b des Bügels 10. Dieser Übergang wird lediglich durch einen schmalen Spalt zwischen den axialen Enden der Rolle 12 und dem benachbarten Schenkel 10a bzw. 10b unterbrochen. Der so zwischen der Rolle 12 und den Innenflächen der Schenkel 10a, 10b des Bügels 10 gebildete Übergang erstreckt sich annähernd kreisförmig über 90° und wird mit annähernd gleicher Krümmung am Bügel 10 fortgesetzt. Zwischen dem Bügel 10 und der Rolle 12 ist ein Durchgangsschlitz 18 für das Gurtband 20 gebildet, das durch die Rolle 12 umgelenkt wird. Dieser Durchgangsschlitz 18 ist an seinen Enden bauchig erweitert. Die so gebildeten bauchigen Erweiterungen 18a, 18b setzen die Krümmung des Überganges zwischen der Rolle 12 und der Innenfläche der Schenkel 10a, 10b des Bügels 10 stetig fort, um anschließend nach einem Wendepunkt in eine gerade, innenliegende Kante 10c des Blechstreifens, aus dem der Bügel 10 gebogen ist, überzugehen.

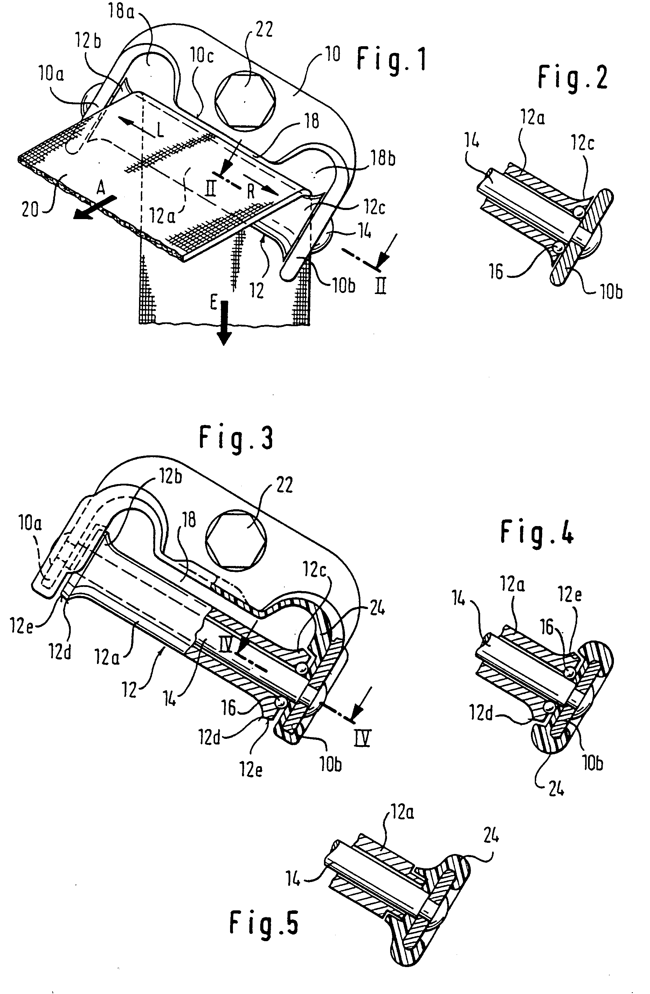

Der Bügel 10 ist mittels eines Schraubbolzens 22 am Mittelpfosten eines Fahrzeugs befestigt. Er ist auf diesem Schraubbolzen 22 frei schwenkbar gelagert. Die in Fig. 1 gezeigte Schwenkstellung des Umlenkbeschlages entspricht seiner Gebrauchsstellung bei angelegtem Sicherheitsgurt. In diesem Zustand läuft das Gurtband vom Gurtaufroller senkrecht nach oben, über die Rolle 12 und dann schräg zur Schulter des Fahrzeuginsassen. Die Orientierung des Umlenkbeschlages ergibt sich allein durch diesen Gurtbandverlauf. Wenn Gurtband in Richtung des Pfeils A von dem Gurtaufroller abgezogen wird, ist das Gurtband bestrebt, in Richtung eines Pfeils L in Axialrichtung der Rolle 12 hochzuwandern, wobei die betreffende Längskante des Gurtbandes 20 über den Endabschnitt 12b der Rolle 12 läuft. Diese Längskante des Gurtbandes 20 folgt dabei der stetigen Krümmung dieses Endabschnitts 12b; Stauchungen des Gurtbandes, die den leichten Lauf über die Rolle 12 beeinträchtigen würden, werden vermieden. Beim Aufrollen des Gurtbandes in Richtung E ist das Gurtband bestrebt, auf der Rolle 12 in Richtung des Pfeils R in Fig. 1 zu wandern; dabei läuft die entsprechende Längskante des Gurtbandes über den Endabschnitt 12c und nimmt dort die stetige Krümmung dieses Endabschnitts an.

Auch bei der in Fig. 3 gezeigten Ausführungsform weist die Rolle 12 einen zylindrischen Hauptabschnitt 12a und erweiterte Endabschnitte 12b, 12c auf. Diese Endabschnitte 12b, 12c bilden jedoch nur einen Bereich von etwa 45° des konkav gekrümmten Überganges zwischen dem Hauptabschnitt 12a und der Innenfläche des Bügels 10. Die konkav gekrümmte Fläche des Endabschnitts 12b bzw. 12c endet an einer Kante 12d und geht in eine entgegengesetzt geneigte kegelige Fläche 12e über. Dieser kegeligen Fläche 12e liegt unter Bildung eines schmalen Spaltes eine entsprechend geformte Gegenfläche eines Auskleidungsteils 24 gegenüber, das die Innenfläche des Bügels 10 abdeckt und die Krümmung der Endabschnitte 12b, 12c der Rolle 12 stetig fortsetzt, so daß die gleichen geometrischen Verhältnisse wie bei der zuvor beschriebenen Ausführungsform realisiert sind. Wie aus Fig. 4 ersichtlich ist, umgreift das Auskleidungsteil 24 die Kanten des Blechstreifens, aus dem der Bügel 10 gebildet ist. Das Auskleidungsteil 24 besteht aus Kunststoff und wird auf den Bügel 10 aufgeklipst sowie durch den Bolzen 14 festgelegt.

Bei der in Fig. 5 gezeigten Ausführungsform schließt das Auskleidungsteil 24 unmittelbar unter Bildung eines schmalen radialen Spaltes an den zylindrischen Hauptteil 12a der Rolle 12 an. Der stetig konkav gekrümmte Übergang wird hier also allein durch das Auskleidungsteil 24 gebildet. Auch ohne Verwendung von Wälzkörpern ist die Rolle leichtgängig auf dem Bolzen 14 gelagert. Die axialen Enden der Rolle 12 sind unter Bildung einer Stufe im Durchmesser reduziert. Die so gebildeten, hülsenförmigen Endabschnitte der Rolle 12 sind von einem Kragen der Auskleidung 24 umgeben. Durch diese Gestaltung wird die Leichtgängigkeit der Rolle 12 auf dem Bolzen 14 verbessert. Obwohl bei dieser Ausführungsform ein Randbereich des Gurtbandes über die konkav gekrümmte Fläche des Auskleidungsteils 24 laufen kann, wird die Leichtgängigkeit des Gurtbandes nicht nennenswert beeinträchtigt, da der Hauptteil über die leichtgängig drehbare Rolle 12 läuft.

Es wird darauf hingewiesen, daß die in Fig. 5 gezeigte Ausführungsform nicht unter den Schutzumfang der Patentansprüche fällt, da die Rolle hier nicht mittels Wälzkörpern gelagert ist.

Bei den beschriebenen Ausführungsformen muß das Auskleidungsteil 24 kein separates Teil bilden. Es kann auch durch eine Kunststoff-Umspritzung des Bügels 10 gebildet werden. Eine andere Ausführung besteht darin, daß der Bügel 10 nicht aus einem Blechstreifen gebogen wird, sondern durch Pressen oder Druckgießen so gestaltet wird, daß sich die Konturen des Auskleidungsteils ergeben, ein Auskleidungsteil also entfallen kann.

## Patentansprüche

1. Umlenkbeschlag für Sicherheitsgurte, mit einem Bügel (10), der zwei parallele Schenkel (10a, 10b) aufweist, zwischen denen eine Rolle (12) drehbar gelagert ist, wobei zwischen den Innenflächen der Schenkel (10a, 10b) und der Rolle (12) ein Übergang vorgesehen ist, der durch je einen schmalen Spalt zwischen den axialen Enden der Rolle (12) und dem benachbarten Schenkel (10a, 10b) unterbrochen ist, dadurch gekennzeichnet, daß die Rolle (12) auf Wälzkörpern (16) gelagert ist, daS der Übergang zwischen dem zylindrischen Hauptabschnitt (12a) der Rolle (12) und der Innenfläche der Schenkel (10a, 10b) des Bügels (10) gebildet und stetig konkav gekrümmt ist, daß zwischen der Rolle (12) und dem Bügel (10) ein Durchgangsschlitz (18) gebildet ist, dessen Enden bauchig erweitert sind, wobei die bauchigen Erweiterungen (18a, 18b) die Krümmung des Übergangs stetig bis mindestens etwa 180° fortsetzen, und daß sich der zwischen der Rolle (12) und den Innenflächen der Schenkel (10a, 10b) gebildete Übergang annähernd kreisförmig über 90° erstreckt, so daß bei über die Innenflächen der Schenkel (10a, 10b) laufendem Gurtband dessen Längskanten der stetigen Krümmung folgen.

2. Umlenkbeschlag nach Anspruch 1, dadurch gekennzeichnet, daß an den zylindrischen Hauptabschnitt (12a) der Rolle axial auswärts an jedem Ende ein erweiterter Endabschnitt (12b, 12c) der Rolle (12) anschließt, der seinerseits von einem Auskleidungsteil (24) fortgesetzt wird, das sich wenigstens teilweise über die Innenfläche des Bügels (10) erstreckt.

3. Umlenkbeschlag nach Anspruch 2, dadurch gekennzeichnet, daß der erweiterte Endabschnitt (12a, 12b) der Rolle (12) einen Bereich von etwa 45° des kreisförmigen Übergangs bildet.

4. Umlenkbeschlag nach Anspruch 1, dadurch gekennzeichnet, daß an den zylindrischen Hauptabschnitt (12a) der Rolle (12) axial auswärts ein Auskleidungsteil (24) anschließt, das sich wenigstens teilweise über die Innenfläche des Bügels (10) erstreckt.

5. Umlenkbeschlag nach einem der vorstehenden Ansprüche, dadurch gekennzeichnet, daß das Auskleidungsteil (24) die Innenfläche des Bügels (10) vollständig abdeckt und dessen Schenkel (10a, 10b) umgreift.

## Claims

1. A deflecting fitting for safety belts, comprising a yoke (10) which has a pair of parallel limbs (10a, 10b) between which a roller (12) is rotatably mounted, with a transition being provided between the internal surfaces of the limbs (10a, 10b) and the roller (12), the transition being interrupted by a narrow gap between each axial end of the roller (12) and the adjacent limb (10a, 10b), characterized in that the roller (12) is rotatably mounted on anti-friction elements (16), that the transition is formed between the cylindrical main section (12a) of the roller (12) and the internal surfaces of the limbs (10a, 10b) of the yoke (10) and is continuously concavely curved, that between the roller (12) and the yoke (10) a passage slot (18) is formed the ends of which are enlarged in a cusped manner, the cusp-like enlarged parts (18a, 18b) smoothly continuing the curvature of the transition to at least approximately 180°, and that the transition formed between the roller (12) and the internal surfaces of the limbs (10a, 10b) extends approximately circularly through 90°, such that when the belt webbing runs over the internal surfaces of the limbs (10a, 10b), its longitudinal edges follow the continuous curvature.

2. The deflecting fitting according to claim 1, characterized in that the cylindrical main section (12a) of the roller is adjoined at each end in an axially outward direction by an enlarged terminal section (12b, 12c) of the roller (12), which for its part is continued by a lining part (24) which extends at least partly over the internal surface of the yoke (10).

3. The deflecting fitting according to claim 2, characterized in that the enlarged terminal sections (12a, 12b) of the roller (12) constitute a fraction of approximately 45° of the circular transition.

4. The deflecting fitting according to claim 1, characterized in that the cylindrical main section (12a) of the roller (12) is adjoined in an axially outward direction by a lining part (24) which extends at least partly over the internal surface of the yoke (10).

5. The deflecting fitting according to any one of the preceding claims, characterized in that the lining part (24) completely covers the internal surface of the yoke (10) and encompasses the limbs (10a, 10b) thereof.

## Revendications

1. Ferrure de renvoi pour ceintures de sécurité, avec un étrier (10), qui présente deux branches parallèles (10a, 10b), entre lesquelles est monté de façon à pouvoir tourner un rouleau (12), une transition étant prévue entre les faces intérieures des branches (10a, 10b) et le rouleau (12), transition qui est interrompue par une fente étroite entre les extrémités axiales du rouleau (12) et la branche voisine (10a, 10b), caractérisée en ce que le rouleau (12) est monté sur des éléments de roulement (16), en ce que la transition est formée entre la section cylindrique principale (12a) du rouleau (12) et la face intérieure des branches (10a, 10b) de l'étrier (10) et est incurvée en continu de façon concave, en ce qu'entre le rouleau (12) et l'étrier (10) il est formé une fente de passage (18), dont les extrémités s'élargissent en formant un ventre, les élargissements qui forment un ventre (18a, 18b) prolongeant la courbure de la transition de façon continue sur au moins à peu près 180°, et en ce que la transition, formée entre le rouleau (12) et les faces intérieures des branches (10a, 10b), s'étend approximativement en forme de cercle sur 90°, de telle sorte que, quand la sangle de la ceinture passe sur les faces intérieures des branches (10a, 10b), ses bords longitudinaux suivent la courbure constante.

2. Ferrure de renvoi selon la revendication 1, caractérisée en ce qu'une section terminale élargie (12b, 12c) du rouleau (12) se raccorde à la section principale cylindrique (12a) du rouleau axialement vers l'extérieur à chaque extrémité, section terminale élargie (12b, 12c) qui de son côté est prolongée par une pièce de revêtement (24), qui s'étend au moins en partie sur la face intérieure de l'étrier (10).

3. Ferrure de renvoi selon la revendication 2, caractérisée en ce que la section terminale élargie (12a, 12b) du rouleau (12) forme une zone d'à peu près 45° de la transition circulaire.

4. Ferrure de renvoi selon la revendication 1, caractérisée en ce qu'à la section cylindrique principale (12a) du rouleau (12) se raccorde axialement vers l'extérieur une pièce de revêtement (24), qui s'étend au moins en partie sur la face intérieure de l'étrier (10).

5. Ferrure de renvoi selon l'une des revendications précédentes, caractérisée en ce que la pièce de revêtement (24) recouvre complètement la face intérieure de l'étrier (10) et entoure ses branches (10a, 10b).
